# EUROPÄISCHE PATENTSCHRIFT

(11) **EP 3 514 106 B1**
(45) Veröffentlichungstag und Bekanntmachung des Hinweises auf die Patenterteilung: **09.04.2025**
(21) Anmeldenummer: 19157804.6
(22) Anmeldetag: 12.01.2017
(51) Int. Cl.: B67D 1/08

(54) **SYSTEM AUFWEISEND EINEN DISPENSER, EINE KARTUSCHENHALTERUNG UND EINE KARTUSCHE**
SYSTEM COMPRISING A DISPENSER, A CARTRIDGE HOLDER AND A CARTRIDGE
SYSTÈME COMPORTANT UN DISTRIBUTEUR, UN SUPPORT DE CARTOUCHE ET UNE CARTOUCHE

(30) Priorität: 12.01.2016 DE 102016200254; 01.07.2016 DE 102016212012; 01.07.2016 DE 102016212013; 27.09.2016 DE 102016218509; 27.09.2016 DE 102016218507; 29.09.2016 DE 102016218884
(43) Veröffentlichungstag der Anmeldung: 24.07.2019
(62) Teilanmeldung aus: 17700340.7
(73) Patentinhaber: Freezio AG, 8580 Amriswil (CH)
(72) Erfinder: KRÜGER, Marc, 51467 Bergisch Gladbach (DE); EMPL, Günter, 51429 Bergisch Gladbach (DE); FISCHER, Daniel, 8590 Romanshorn (CH)
(74) Vertreter: Loock, Jan Pieter

(56) Entgegenhaltungen:
- EP-A1- 2 017 221
- NL-A1- 1 033 412
- NL-C2- 1 033 412
- US-A- 4 901 890
- US-A1- 2002 130 140

## Beschreibung

### Stand der Technik

Die Erfindung betrifft ein System aufweisend einen Dispenser mit einer Kartuschenhalterung.

Solche Systeme sind aus dem Stand der Technik, beispielsweise aus EP 2 017 221 A1 und WO 96/36556 A1, grundsätzlich bekannt und werden zur Herstellung von Getränken aus vorportionierten Kartuschen verwendet. Die Herstellung von Getränken mit solchen Systemen ist für den Anwender äußerst komfortabel, da er lediglich eine Kartusche in den Dispenser einsetzen und eine Startprozedur initiieren muss. Der Dispenser, auch als Getränkezubereitungsmaschine bezeichnet, übernimmt dann vollautomatisiert die Erzeugung des Getränks, das heißt insbesondere, dass das Lebensmittel- oder Getränkesubstrat mit einer vorbestimmten Menge an Flüssigkeit, insbesondere kaltem und karbonisiertem Wasser vermischt wird und in ein Trinkgefäß geleitet wird. Auf diese Weise lassen sich insbesondere Mixgetränke für den Anwender deutlich einfacher, schneller und mit weniger Aufwand herstellen. Der Anwender kann dabei aus einer Vielzahl von verschiedenen Kartuschen auswählen, so dass er je nach Belieben unterschiedliche Getränke herstellen kann.

Das eingangs genannte System ist also aus dem Stand der Technik bekannt und wird dafür eingesetzt mittels Kartuschen beispielsweise Kaltgetränke herzustellen. Wichtig ist, dass die Kartusche sicher im dem Dispenser gehalten ist, so dass zum einen keinerlei Leckage zum anderen aber auch keine Rückkontamination stattfindet.

### Offenbarung der Erfindung

Es war deshalb die Aufgabe der vorliegenden Erfindung ein System aufweisend einen Dispenser zur Verfügung zu stellen, der diesen Anforderungen gerecht wird. Insbesondere solle eine leckagefreie Getränkeherstellung ohne Rückkontamination des Dispensers ermöglicht werden. Der Dispenser soll gleichzeitig einen hohen Bedienkomfort bieten und kostengünstig realisierbar sein. Eine weitere Aufgabe der vorliegenden Erfindung ist es, die Schaumbildung auf dem Getränk oder Lebensmittel kontrolliert einzustellen.

Gelöst wird die Aufgabe mit einem System gemäß Anspruch 1.

Die zu diesem Gegenstand der vorliegenden Erfindung gemachten Ausführungen gelten für die anderen Gegenstände der vorliegenden Erfindung gleichermaßen und umgekehrt.

Die vorliegende Erfindung betrifft einen Dispenser mit einer Kartuschenhalterung, die die Kartusche an dem Dispenser lagert und die Kartusche abstützt und/oder führt. Die Kartusche weist einen Hohlraum auf, in dem sich ein Getränke- und/oder Lebensmittelsubstrat befindet. Dieses Substrat ist vorzugsweise flüssig und insbesondere ein Konzentrat und wird mit einem Lösemittel, insbesondere Wasser, zur Herstellung des Getränks oder Lebensmittels gemischt und dann in einem Behälter, insbesondere einem Glas, das vorzugsweise auf einer unterhalb der Halterung angeordneten Auflage des Dispensers steht, aufgefangen. Das Getränke- und/oder Lebensmittelsubstrat umfasst vorzugsweise flüssige Pre-Mix-Bestandteile für Erfrischungsgetränke, wie koffein-, kohlensäure-, frucht- und/oder zuckerhaltige Limonaden und Säfte, Bier(misch)getränke oder sonstige alkoholische oder nicht alkoholische (Misch-)Getränke.

Erfindungsgemäß ist nun eine Führung und/oder Verdrehsicherung an der Kartuschenhalterung vorgesehen. Dadurch wird sichergestellt, dass die Kartusche zum einen zumindest bezüglich einer Raumrichtung eine bestimmte Lage relativ zu dem Dispenser einnimmt zum anderen wird verhindert, dass sich die Kartusche vor oder während der Herstellung des Getränks verdreht oder in einer falschen Orientierung eingesetzt wird. Auf diese Weise wird auch sichergestellt, dass falls die Kartusche mit einer Produktidentifikationskennung ausgestattet ist, welche von einem Kennungsdetektor des Dispensers auszulesen ist, die Kennung stets dem Detektor zugewandt ist, so dass ein zuverlässiges und fehlerfreies Auslesen ermöglicht wird.

Erfindungsgemäß weist die Kartuschenhalterung eine Ausnehmung auf, die die Kartusche und/oder die Kartuschenaufnahme zumindest teilweise aufnimmt. Vorzugsweise wirken die Ausnehmung in der Kartuschenhalterung und die Kartusche oder Kartuschenaufnahme zumindest teilweise formschlüssig zusammen und wirken so als Auflager und/oder Verdrehsicherung. Vorzugsweise erstreckt sich die Ausnehmung bis zum Rand, so dass der Umfang der Ausnehmung an einer Stelle offen ist. Dort kann die Ausbuchtung in der Kartuschenaufnahme platziert werden. Alternativ weist die Ausnehmung eine Ausbuchtung für die Ausbuchtung an der Kartuschenaufnahme auf.

Alternativ oder zusätzlich weist die Halterung eine Führung auf, die mit dem Umfang der Kartuschenaufnahme und/oder die Kartusche zusammenwirkt. Diese Führung kann beispielsweise ein Stehkragen sein, der sich vorzugsweise im Randbereich der Ausnehmung in der Halterung erstreckt. Die Führung erstreckt sich vorzugsweise in einem rechten Winkel zu der Horizontalen und verhindert ein Kippen der Kartusche relativ zu der Vertikalen. Gemäß einer bevorzugten Ausführungsform weisen die Ausnehmung und/oder die Führung eine Öffnung für einen Vorsprung/Ausbuchtung an der Kartuschenaufnahme auf, der als Verdrehsicherung oder als zusätzliche Stabilisierung wirken kann.

Die Halterung weist einen Flüssigkeitsanschluss auf. Mit diesem Flüssigkeitsanschluss wird das Lösemittel zur Herstellung des Getränks zur Verfügung gestellt. Der Flüssigkeitsanschluss der Halterung wird vorzugsweise mit dem Flüssigkeitszulauf in der Kartuschenaufnahme, insbesondere flüssigkeitsdicht, in Verbindung gebracht. Es kann vorgesehen sein, dass der Flüssigkeitsanschluss mit Fluid gespeist wird, welches durch ein Kühlaggregat gekühlt wird, wobei das Kühlaggregat Teil des Dispensers oder eines mit dem Dispenser in Wirkverbindung stehenden separaten Kühlschranks ist. In vorteilhafter Weise sind somit Kaltgetränke herstellbar, auch wenn die Kartusche selbst nicht gekühlt ist und beispielweise Zimmertemperatur aufweist. Die Integration des Systems in einen bestehenden Kühlschrank hat den Vorteil, dass das bestehende Kühlaggregat des Kühlschranks für den Dispenser in effizienter Weise einfach mitgenutzt werden kann. Insbesondere bei sogenannten "side-by-side"-Kühlschränken (oft auch als amerikanische Kühlschränke bezeichnet) findet sich in der Front ausreichend Bauraum zur Integration des Dispensers. Denkbar ist, dass es sich bei dem Dispenser um ein Nachrüstset für einen solchen Kühlschrank handelt. Das Kühlaggregat umfasst vorzugsweise eine Kompressorkühleinheit, eine Absorberkühleinheit oder einen thermoelektrischen Kühler. Es kann vorgesehen sein, dass der Flüssigkeitsanschluss mit Fluid gespeist wird, welches durch einen Karbonisierer mit Kohlensäure versetzt wird. Denkbar ist, dass der Karbonisierer Teil des Dispensers ist und wobei der Karbonisierer eine Aufnahme für eine CO2-Patrone und eine Zuführeinrichtung zum Versetzen des Fluides mit CO2 aus der CO2-Patrone aufweist. Vorteilhafterweise lassen sich mit dem System somit auch mit Kohlensäure versetzte (Erfrischungs-) Getränke herstellen. Alternativ wäre auch denkbar, dass der Karbonisierer einen externen CO2-Anschluss aufweist. Das Fluid umfasst insbesondere Wasser, welches aus einer Wasserleitung oder einem Wassertank des Dispensers mittels einer oder mehrerer Pumpen, vorzugsweise Membranpumpen, bereitgestellt wird. Die Förderung des Wassers zum Flüssigkeitsanschluss wird vorzugsweise mittels eines Durchflusssensors, beispielsweise einem Ultraschalldurchflusssensor oder einem magnetisch-induktivem Durchflusssensor, überwacht.

Bevorzugt ist vorgesehen, dass die Halterung einen mit einer Druckluftquelle verbundenen Druckluftauslass aufweist. Der Druckluftauslass fungiert als Kartuschenentladeeinrichtung und dient dazu, Druckluft von außen in den Hohlraum der Kartusche einzuleiten, wodurch das Lebensmittel- und/oder Getränkesubstrat aus dem Hohlraum in eine Mischkammer der Kartuschenaufnahme zu drücken. Die Druckluft wird insbesondere von dem Dispenser bereitgestellt. Die Kartuschenaufnahme weist vorzugsweise einen Gaseinlass auf, welcher beim Einsetzen der Kartuschenaufnahme in die Halterung direkt an den Druckluftauslass der Halterung angekoppelt wird. Dies hat den Vorteil, dass eine Rückkontamination in Richtung des Dispenser wirksam vermieden wird, weil der Druckkanal sofort beim Einsetzen des Kartuschensystems in die Halterung unter Druck steht und somit verhindert wird, dass Lebensmittel- und/oder Getränkesubstrat in Richtung des Dispensers und insbesondere in Richtung der Druckluftquelle wandert. Das Substrat kann sich ausgehend von dem Hohlraum in der Kartusche somit lediglich in Richtung der Mischkammer bewegen.

Ferner wird beschrieben ein System mit einer Kartuschenaufnahme und/oder einer Kartusche, wobei die Kartuschenaufnahme die Kartusche reversibel oder irreversibel insbesondere teilweise aufnimmt. Die Kartusche hat einen Hohlraum, in dem sich die Getränke- und/oder Lebensmittelsubstanz befindet und die vor der Getränke- und/oder Lebensmittelherstellung, insbesondere durch die Membran, hermetisch verschlossen ist. Zur Herstellung des Getränks und/oder Lebensmittels wird die Kartusche dann geöffnet, insbesondere wird die Membran aufgestochen, und das Substrat läuft/strömt, insbesondere unterstützt durch Einleiten von Druckluft in den Hohlraum, in eine Mischkammer der Kartuschenaufnahme, die auch über einen Zulauf für ein Verdünnungsmittel (auch als Lösungsmittel bezeichnet), insbesondere Wasserzulauf, verfügt, das mit dem Substrat gemischt wird, um das fertige Getränk oder Lebensmittel zu erzeugen, das durch einen ebenfalls an der Kartuschenaufnahme vorgesehenen Ablauf aus der Mischkammer herausläuft. Der Volumenstrom des Lösungsmittels ist dabei in der Regel wesentlich größer als der Volumenstrom des Substrats. Die Kartusche und die mit der Kartusche verbundene Kartuschenaufnahme bilden zusammen ein Kartuschensystem, welches in die Halterung des Dispensers einsetzbar ist.

Der Strömungsquerschnitt, d.h. der Querschnitt, der für Strömung der Flüssigkeit, insbesondere des Lösungsmittelstroms und/oder des Gemischs aus Lösungsmittel und Substrat zur Verfügung steht, kann so vorgesehen werden, dass sich bezogen auf die Strömungsrichtung des Lösungsmittels die Strömungsgeschwindigkeit zunächst verlangsamt und dann wieder beschleunigt. Die Beschleunigung, die durch eine Strömungsquerschnittsverengung erreicht wird, findet möglichst statt, nachdem das Lösungsmittel und das Substrat vermischt worden sind.

Erfindungsgemäss weist die Kartuschenaufnahme ein Aufstechmittel auf, das die Membran vor der Herstellung des Getränks oder Lebensmittels perforiert. Dieses Aufstechmittel ist erfindungsgemäß als Dorn gestaltet, der aus dem Boden der Mischkammer ragt. Die Kartuschenaufnahme weist vorzugsweise eine Dornführung auf, in welcher das Aufstechmittel verschiebbar gelagert ist. Das Aufstechmittel ist auf diese Weise zwischen einer eingefahrenen Position, in welcher das Aufstechmittel von der Membran beabstandet ist, und einer ausgefahrenen Position, in welcher das Aufstechmittel die Membran durchsticht und bis in den Hohlraum der Kartusche ragt, verschiebbar.

Vorzugsweise weist das Aufstechmittel an seinem äußeren Umfang mindestens eine, vorzugsweise mehrere Ein- und/oder Ausbuchtungen auf, die als Ablauf für das Substrat dienen. Die Menge und die Größe der Ein- und/oder Ausbuchtungen hängt vorzugsweise von der Viskosität des Substrats ab. Die Außenwandung des Aufstechmittels ist also mit wenigstens einem Seitenkanal zum Leiten des Substrats in Richtung der Mischkammer, wenn die Membran durchstochen ist, versehen. Durch den seitlich am Aufstechmittel ausgebildeten Seitenkanal kann das Substrat dann an der Membran vorbei in Richtung Mischkammer fließen. Vorzugsweise sind eine Mehrzahl von Seitenkanälen am Aufstechmittel ausgebildet. Die Seitenkanäle sind insbesondere jeweils in Form einer einseitig offenen Nut ausgebildet. Denkbar ist, dass der Querschnitt der Seitenkanäle und/oder die Anzahl der Seitenkanäle an die Viskosität des Substrats angepasst ist, so dass die Seitenkanäle den Fluss des Substrats in Richtung Mischkammer kontrollieren bzw. begrenzen. Bei einer hohen Viskosität werden mehrere Seitenkanäle oder Seitenkanäle mit größerem Querschnitt verwendet, während bei einer niedrigeren Viskosität weniger Seitenkanäle oder Seitenkanäle mit geringerem Querschnitt vorgesehen sind. Für jede Kartusche existiert somit eine passende Kartuschenaufnahme.

Vorzugsweise ist in das Aufstechmittel eine Druckluftleitung, insbesondere in Form eines inneren Kanals, integriert, wobei an einer der Kartusche abgewandten Seite des Aufstechmittels ein, insbesondere von außerhalb der Kartuschenaufnahme zugänglicher Druckluftanschluss der Druckluftleitung zur Verbindung mit einer Druckluftquelle ausgebildet ist und wobei an einer dem Hohlraum der Kartusche zugewandten Seite des Aufstechmittels ein Druckluftausgang der Druckluftleitung zum Einblasen der Druckluft in die Kartusche ausgebildet ist. Vorzugsweise wird bereits beim Einsetzen des Kartuschensystems aus Kartusche und Kartuschenaufnahme in die Halterung bereits Druckluft an den Druckluftanschluss angelegt, um eine etwaige Rückkontamination des Dispensers zu verhindern. Alternativ wird das Aufstechmittel durch die über den Dispenser angelegte Druckluft von der eingefahrenen Position in die ausgefahrene Position verfahren. Anstelle von Druckluft kann auch CO2 in den Hohlraum eingeleitet werden, um das Substrat von dem Hohlraum in die Mischkammer zu überführen.

Vorzugsweise weist das Aufstechmittel also einen Kanal auf, der in oder im Bereich der Spitze endet. Durch diesen Kanal kann ein Gas, insbesondere Luft oder CO₂ in die Kartusche geblasen werden, um die Abgabe des Substrats zu beschleunigen und/oder zu dosieren.

Das System ist vorzugsweise derart ausgebildet, dass eine Kopplung des Druckluftanschlusses mit dem Druckluftauslass der Halterung erfolgt, wenn die Kartuschenaufnahme in die Halterung eingesetzt ist und/oder die Auslösemechanik für den Befestigungsflansch betätigt wird. Die Druckluftleitung wird somit frühestmöglich unter Druck gesetzt, so dass eine Rückkontamination des Dispensers durch das Substrat unterbunden wird.

Vorzugsweise sind der Zulauf und der Ablauf an gegenüberliegenden Enden der Kartuschenaufnahme vorgesehen. Erfindungsgemäß ist das Aufstechmittel in einer Flucht mit dem Zulauf und dem Ablauf vorgesehen.

Die Kartusche wird vorzugsweise aus Kunststoff, insbesondere durch ein Moulding- und/oder ein Blasverfahren hergestellt. Die Kartusche weist eine Seitenwand auf, die beispielsweise einen runden, rechteckigen, quadratischen, konischen oder ovalen Querschnitt aufweist. An einem Ende der Seitenwand ist in der Regel ein Boden, insbesondere einstückig vorgesehen. Die Seitenwand und gegebenenfalls der Bodenbereich spannen einen Hohlraum auf, in dem ein Getränke- und/oder Lebensmittelsubstrat, insbesondere in flüssiger Form vorgesehen ist. An dem anderen Ende des Wandbereichs ist ein Verbindungsbereich vorgesehen, mit dem die Kartusche mit der Kartuschenaufnahme verbunden wird. Diese Kartuschenaufnahme kann Teil eines Dispensers oder ein vom Dispenser separates Bauteil sein.

Vorzugsweise ist der Verbindungsbereich so vorgesehen, dass er wenigstens einen Flansch aufweist. Der Flansch steht aus dem Verbindungsbereich hervor und steht vorzugsweise in einem Winkel, besonders bevorzugt einem rechten Winkel von einem Wandbereich des Verbindungsbereichs ab. Zur Herstellung des Getränks oder Lebensmittels ist der Flansch vorzugsweise horizontal ausgerichtet. Vorzugsweise ist der Flansch aus Vollmaterial, d.h. nicht hohl gefertigt. Insbesondere ist der Flansch gespritzt.

Weiterhin bevorzugt ist der Flansch mit einem Positionier- und oder Abdeckmittel versehen. Das Positioniermittel stellt sicher, dass die Kartusche nur in einer bestimmten Position, insbesondere in einem bestimmten Drehwinkel, insbesondere Bezogen auf die Längsmittelachse der Kartusche an dem Dispenser und/oder an der Kartuschenaufnahme angeordnet werden kann. Das Abdeckmittel deckt einen Bereich, insbesondere einen Bereich, durch den das fertiggestellte Getränk oder Lebensmittel fließt ab. Vorzugsweise sind das Positioniermittel und das Abdeckmittel identisch.

Vorzugsweise ist das Positioniermittel und/oder Abdeckmittel eine Ein- und/oder Ausbuchtung, die aus dem Flansch, insbesondere dessen Umfang hervorsteht. Vorzugsweise ist das Positioniermittel und/oder Abdeckmittel einstückig mit dem Flansch vorgesehen. Beispielsweise ist das Positioniermittel und/oder Abdeckmittel als Nase ausgebildet, die an einer Stelle an den Umfang des Flanschs angeformt ist. Die Dicke des Positioniermittels und/oder Abdeckmittels entspricht dabei zumindest im wesentlichen der Dicke des Flanschs.

Gemäß einer bevorzugten Ausführungsform ist zwischen dem Wandbereich und dem Verbindungsbereich ein Hals vorgesehen. Dieser Hals kann beispielsweise einen runden Querschnitt aufweisen. Der Hals stellt den Wandbereich des Verbindungsbereichs dar. Der Flansch schließt sich vorzugsweise rechtwinklig an den Hals an.

Vorzugsweise ist die Membran, die die Kartusche vor deren Gebrauch, insbesondere hermetisch verschließt, an dem Flansch, insbesondere dessen Stirnfläche, vorgesehen, insbesondere gesiegelt. Dafür kann der Flansch, insbesondere dessen Stirnfläche eine Wulst, insbesondere eine kreisringförmige Wulst aufweisen, die beim Siegeln mit dem Siegelwerkzeug zusammenwirkt. Vorzugsweise ist der äußere Umfang der Membran geringer als der äußere Umfang des Flansches.

Vorzugsweise weist das Aufstechmittel einen Kanal auf. Durch diesen Kanal kann ein Gas in die Kartusche gedrückt werden, das das Getränke- und/oder Lebensmittelsubstrat aus der Kartusche insbesondere in den Mischraum der Kartuschenaufnahme drückt.

### Figurenbeschreibung

Im folgendem wird die Erfindung anhand der Figuren 1 bis 5 erläutert. Diese Erläuterungen sind lediglich beispielhaft und schränken den allgemeinen erfindungsgemäßen Gedanken nicht ein. Die Erläuterungen gelten für die erfindungsgemäße Kartusche und für das erfindungsgemäße System gleichermaßen.
- Figur 1: zeigt die Kartusche und die Kartuschenaufnahme des Systems gemäß einer ersten Ausgestaltung

- Figuren 2 - 5: zeigen einen Dispenser und ein System gemäß der ersten Ausführungsform der vorliegenden Erfindung. Ausgestaltung.
- Figuren 6a bis 6c: zeigen eine Kartusche eines Systems gemäß einer zweiten Ausgestaltung.

- Figuren 7a und 7b: zeigen eine Kartuschenaufnahme des Systems gemäß der zweiten Ausgestaltung.

- Figuren 8a und 8b: zeigen ein Aufstechmittel der Kartuschenaufnahme des Systems gemäß der zweiten Ausgestaltung.

- Figuren 9a und 9b: zeigen ein Dispenser und ein System gemäß einer dritten Ausgestaltung.

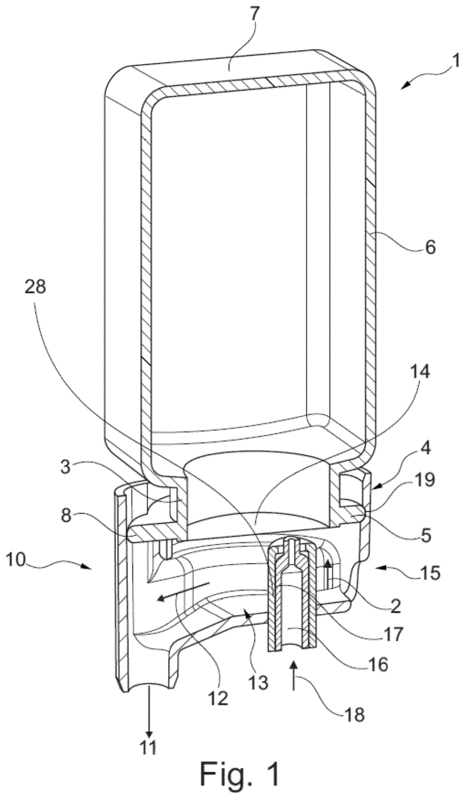

Figuren 1 zeigt ein Kartuschensystem, welches aus einer Kartusche 1 sowie einer Kartuschenaufnahme 10 besteht. Die Kartusche 1 wird vorzugsweise aus einem Kunststoffmaterial gefertigt, beispielsweise durch Spritzen oder Spritzgießen oder durch eine Blastechnik. Die Kartusche 1 weist einen, in dem vorliegenden Fall quadratischen, Wandbereich 6 auf, an dessen einem, hier oberen Ende sich ein Bodenbereich 7 anschließt.

Der Wandbereich 6 und der Bodenbereich 7 begrenzen einen Hohlraum, in dem sich das Getränke- und/oder Lebensmittelsubstrat, insbesondere ein Konzentrat, befindet, mit dem ein Getränk oder Lebensmittel hergestellt werden kann. An dem dem Bodenbereich 7 gegenüberliegenden Ende, hier unteren Ende, des Wandbereiches 6 ist ein Verbindungsbereich 4 vorgesehen, der in dem vorliegenden Fall einen Hals 3 sowie einen Flansch 5 aufweist. Der Hohlraum der Kartusche 1 wird nach deren Befüllung durch einen Verschluss, hier eine Membran 14, hermetisch abgeschlossen. Die Membran 14, insbesondere eine Kunststofffolie wird vorzugsweise stoffschlüssig, insbesondere durch Siegeln mit dem Flansch 5 verbunden. Mit dem Verbindungsbereich 4 wird die Kartusche 1 mit einer Kartuschenaufnahme 10 verbunden. An dem Flansch 5 ist optional ein Positionier- und/oder Abdeckmittel 8 vorgesehen, das in dem vorliegenden Fall als Ausbuchtung, insbesondere als nasenförmige Ausbuchtung, vorgesehen ist. Die Nase ist hier einstückig an den Flansch 5 angeformt. Des Weiteren weist das Kartuschensystem eine Kartuschenaufnahme 10 auf. Die Kartuschenaufnahme 10 weist einen Zulauf 15 für ein Verdünnungsmittel (auch als Lösemittel bezeichnet), welches vorzugsweise Wasser umfasst, sowie eine Mischkammer 13 auf, in der das Verdünnungsmittel und das Getränke- und/oder Lebensmittelsubstrat miteinander gemischt werden. Die Strömungsrichtung des Gemisches ist durch den Pfeil 12 dargestellt. Das fertiggestellte Getränk/Lebensmittel verlässt die Mischkammer 13 durch den Ablauf 11 und wird in einem Behälter (nicht dargestellt), beispielsweise einem Trinkglas aufgefangen. Weiterhin weist die Kartuschenaufnahme 10 ein Aufstechmittel 16, hier einen Dorn, auf, der die Membran 14, die an den Flanschbereich 5 der Kartusche 1 gesiegelt ist, aufsticht, so dass das Getränke- oder Lebensmittelsubstrat insbesondere entlang der Außenfläche des Dorns, der dafür an seiner Außenseite vorzugsweise mit Seitenkanälen 17 versehen ist, in die Mischkammer 13 fließen kann.

Um die Membrane 14 zu durchstechen, werden die Kartusche 1 und/oder die Kartuschenaufnahme 10 relativ sowie längs zueinander verschoben, so dass der Dorn 16 die Membrane 14 durchdringt. Alternativ ist der Dorn 16 längsverschiebbar in einer Dornführung 28 der Kartuschenaufnahme 10 gelagert, so dass keine Relativbewegung zwischen der Kartuschenaufnahme 10 und der Kartusche 1 notwendig ist, sondern nur der Dorn 16 von einer eingefahrenen Position, in welcher er von der Membran 14 beabstandet ist (siehe Figur 1), in eine ausgefahrene Position, in welcher er die Membran 14 durchsticht und bis in den Hohlraum ragt, überführt wird.

Der Fluss des Substrates in die Mischkammer 13 kann durch Gas, das durch einen Kanal 18 in dem Aufstechdorn 16 in den Hohlraum der Kartusche 1 gedrückt wird, beschleunigt und gezielt gesteuert werden. Beispielsweise kann der Druck in der Kartusche 1 und damit der Volumenstrom des Substrates dem Volumenstrom des Lösemittels angepasst werden. Dies kann insbesondere dann von Interesse sein, wenn zur Beeinflussung der Schaumbildung der Volumenstrom des Lösungsmittels gezielt gesteuert oder geregelt wird. Der Volumenstrom des Substrats wird dann vorzugsweise an den Volumenstrom des Lösemittels angepasst.

Vorzugsweise wirkt der Flansch 5 der Kartusche 1 dichtend mit der Kartuschenaufnahme 10 zusammen und stellt dadurch sicher, dass Flüssigkeit die Mischkammer 13 nur durch den Ablauf 5 verlässt. Des Weiteren kann insbesondere diesen Figuren entnommen werden, dass die Ausbuchtung 8 in dem vorliegenden Fall nicht nur ein Positioniermittel ist, sondern auch den Ablauf 11 in der Kartuschenaufnahme insbesondere dichtend abdeckt. Der Flansch 8 und die daran vorgesehene Ausbuchtung 8 können mit ihrer Stirnfläche und/oder mit ihrem Umfang dichtend mit entsprechenden Flächen der Kartuschenaufnahme zusammenwirken.

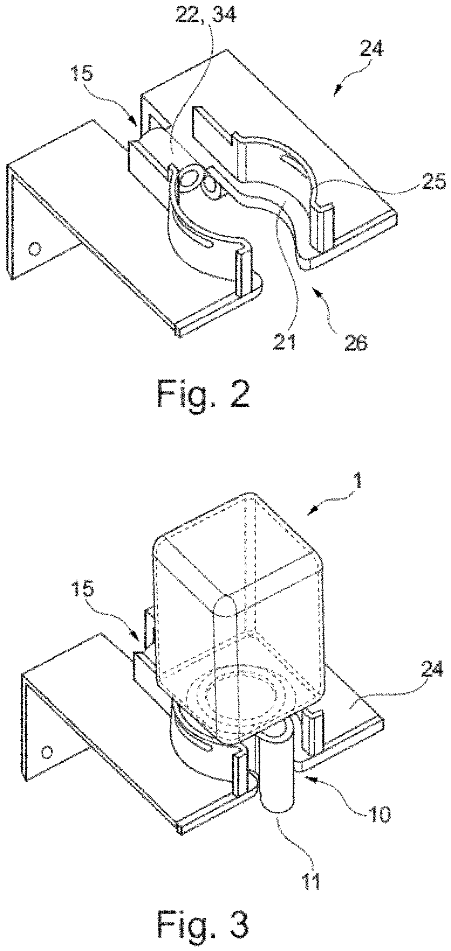

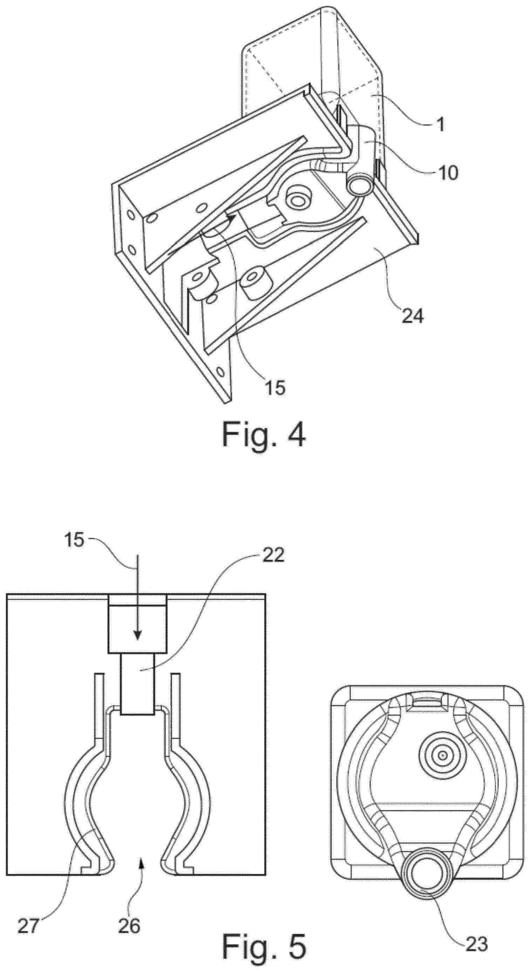

In Figuren 2 bis 5 ist die Halterung 24 des Dispensers und das System gemäß der ersten Ausführungsform gezeigt. In Figur 2 ist die Halterung 24, in welche das in Figur 1 gezeigte Kartuschensystem und insbesondere die Kartuschenaufnahme 10 des Kartuschensystems einsetzbar ist, ohne das Kartuschensystem illustriert. In Figuren 3 und 4 ist das Kartuschensystem in die Halterung 24 eingesetzt. In Figur 5 sind das Kartuschensystem und die Halterung 24 separat voneinander dargestellt.

Die Halterung 24 weist eine Ausnehmung 26 auf, die die Kartuschenaufnahme 10 zumindest teilweise aufnimmt. Insbesondere anhand von Figur 4 ist zu erkennen, dass der Teil der Kartuschenaufnahme 10, der in die Ausnehmung 26 hineinreicht, mit dieser formschlüssig zusammenwirken kann. Die Figuren 2 und 3 verdeutlichen darüber hinaus besonders deutlich, dass sich die Ausnehmung 26 bis zum Rand der Halterung 24 erstreckt, so dass dort eine Öffnung entsteht, in die der Ablauf 11 der Mischkammer 13 hineinragt. Hierdurch ist eine erste Verdrehsicherung gegeben. Des Weiteren kann die Halterung 24 eine Führung 25 aufweisen, die die mit dem Umfang der Kartuschenaufnahme 10 formschlüssig zusammenwirkt und die Kartusche insbesondere gegen Kippen aus der Vertikalen stützt. Auch diese Führung 25 kann eine Ausnehmung aufweisen, aus der der Ablauf 11 herausragen kann. Auch hier verhindert der Ablauf 11 im Zusammenspiel mit der Führung, dass sich die Kartuschenaufnahme 10 relativ zu der Halterung 24 dreht. Vorzugsweise weist die Halterung 24 eine Leitung 22 als Flüssigkeitsanschluss auf, die mit einem Lösemittelreservoir (auch als Reservoir für das Verdünnungsmittel oder Fluidquelle bezeichnet) verbunden ist. Wenn die Kartuschenaufnahme 10 in die Halterung 24 eingesetzt wird, wird eine Fluidverbindung zwischen der Leitung 22 und einem Zulauf 15 der Kartuschenaufnahme 10 erzeugt, wodurch das über die Leitung 22 einströmende Verdünnungsmittel in die Mischkammer 13 gelangt.

Der Ablauf 11 der Kartuschenaufnahme 10 kann schwenkbar vorgesehen sein, insbesondere um den Winkel, mit dem der Strahl des fertiggestellten Getränks oder Lebensmittels in das Gefäß strömt zu verändern. Wird der Strahl beispielsweise in Richtung der Wandung eines Behälters geleitet, der das fertiggestellte Getränk oder Lebensmittel aufnimmt, kann dadurch beispielsweise eine Schaumbildung reduziert werden. Alternativ oder zusätzlich kann eine Auflage, auf der der Behälter steht, gekippt werden, so dass sich wiederum der Auftreffwinkel des Strahls des fertiggestellten Getränks oder Lebensmittels relativ zu Wandung verändert. Auch damit kann die Schaumbildung beeinflusst werden.

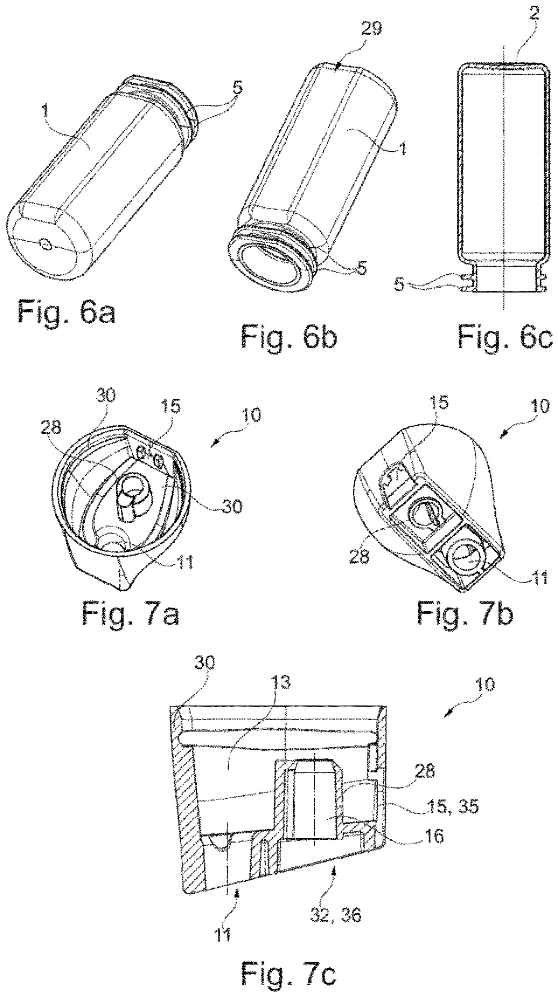

In den Figuren 6a bis 6c sind schematische Ansichten der Kartusche 1 des Kartuschensystems des Systems gemäß einer beispielhaften zweiten Ausführungsform gezeigt. Es ist zu sehen, dass die Kartusche 2 ein flaschenförmiges Objekt mit abgerundeten Kanten, abgeflachten Längsseiten und einer Kartuschenöffnung auf einer dem Bodenbereich 7 entlang der Längsachse der Kartusche 1 gegenüberliegenden Seite umfasst. Im Bereich der Kartuschenöffnung weist die Kartusche 1 zwei umlaufende Halteflansche 5 auf, auf welche die Kartuschenaufnahme 10 aufgeclipst wird. Eine Seite der Kartusche 1 der ansonsnte runden oder abgerundenen Kartusche 1 weist einen abgeflachten Bereich 29 auf. In den abgeflachten Bereich wird vorzugsweise die Produktidentifikationskennung aufgebracht.

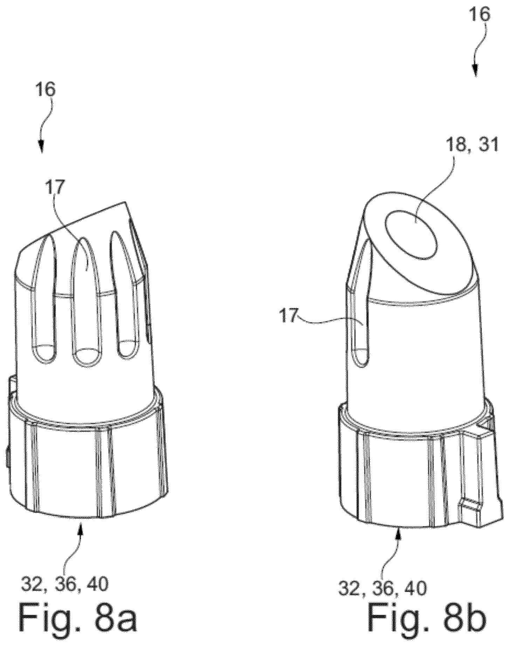

Die Figuren 7a, 7b und 7c zeigen schematische Ansichten einer Kartuschenaufnahme 10 des Kartuschensystems des Systems der beispielhaften zweiten Ausführungsform der vorliegenden Erfindung. Die Kartuschenaufnahme 10 weist beidseitig eine zumindest teilweise umlaufende Rastleiste 30 auf, mit welcher die Kartuschenaufname 10 auf die Halteflansche 5 der Kartusche 1 aufgeclipst wird. Ferner weist die Kartuschenaufnahme 10 die Mischkammer 13 auf, in welche an ihrer rückwärtigen Seite der Zulauf 15 in Form einer einfachen Durchgangsöffnung in der Wandung der Kartuschenaufnahme 10 ausgebildet ist. Der Zulauf 15 ist dazu vorgesehen, mit einer Leitung 22, welche in Fluidverbindung mit dem Wasserreservoir steht, verbunden zu werden, sobald das Kartuschensystem in die Halterung 24 eingesetzt wird. Auf diese Weise kann optional gekühltes und/oder carbonisiertes Wasser von dem Dispenser in die Mischkammer 13 strömen. An der Vorderseite ist im Boden der Mischkammer 8 der Getränkeablauf 11 ausgebildet. Der Boden der Mischkammer 8 bildet in Richtung des Getränkeablaufs 11 eine sich stetig vertiefende Vertiefung, so dass nach Beendigung des Getränkeherstellungsprozesses keine Flüssigkeitsrückstände in der Mischkammer 13 verbleiben. Nahezu mittig innerhalb der Mischkammer 13 ist in den Figuren 7a bis 7c zudem die Dornführung 28 zu sehen, in welcher das in Figuren 8a und 8b illustrierte Aufstechmittel 16 verschiebbar gelagert ist.

Die Dornführung 80 umfasst hierfür ein Führungsteil mit einem innenliegenden Führungskanal, in welchem der Aufstechdorn verschiebbar aufgenommen ist. Der Führungskanal ist im Wesentlichen zylinderförmig ausgebildet ist und steht nahezu senkrecht vom Boden der Mischkammer 13 in Richtung der Kartusche 1 hervor. An einem der Kartusche 1 zugewandten Ende des Führungsteils ist ein umlaufender Anschlag mit verringertem Durchmesser ausgebildet, an welchem ein umlaufende Absatz des Aufstechdorns anschlägt, wenn der Aufstechdorn 16 in der ausgefahrenen Position ankommt. Der Anschlag begrenzt somit die Bewegung des Aufstechdorns 16 in Richtung des Hohlrausm6. Auf dem Boden der Mischkammer 13 sind optional Mischstrukturen angeordnet, welche eine Verwirbelung des einströmenden Wassers verursachen und somit die Vermischung des Substrats und des Wassers verbessern.

In **Figuren 8a und 8b** sind Detailansichten des Aufstechmittels 16 (auch als Aufstechdorn bezeichnet) der Kartuschenaufnahme 10 des Systems gemäß der zweiten beispielhaften Ausführungsform der vorliegenden Erfindung dargestellt.

Der Aufstechdorn 16 ist dazu ausgebildet, längsverschieblich in der Dornführung 28 angeordnet zu sein. Er ist somit von einer eingefahrenen Ausgangsposition, in welcher das Aufstechmittel 16 von der Membran 14 beabstandet ist, in eine ausgefahrene Position, in welcher das Aufstechmittel 16 die Membran 14 durchsticht und bis in den Hohlraum der Kartusche 1 ragt, überführbar. Die Überführung des Aufstechmittels 16 von der eingefahrenen Position in die ausgefahrene Position erfolgt mittels eines Auslöseelements des Dispensers.

In den Aufstechdorn 16 ist die entlang des Aufstechdorns 16 verlaufende Druckluftleitung 31 (auch als Kanal 22 bezeichnet) integriert. Die Druckluftleitung 31 verläuft nahezu mittig innerhalb des Aufstechdorns 16 von einem ersten Ende des Aufstechdorns 16 zu einem zweiten Ende des Aufstechdorns 16. Am ersten Ende des Aufstechdorns 16 ist ein von außerhalb der Kartuschenaufnahme 10 zugänglicher Druckluftanschluss 40 der Druckluftleitung 31 ausgebildet, der zur Verbindung mit einem mit einer Druckluftquelle des Dispensers in Fluidverbindung stehenden Druckluftauslass 32 an der Halterung 24 vorgesehen ist. Am zweiten Ende ist ein Druckluftausgang der Druckluftleitung 31 zum Einblasen der Druckluft in den Hohlraum der Kartusche 1 ausgebildet, wenn sich der Aufstechdorn 16 in der ausgefahrenen Position befindet, wodurch dann das Substrat in die Mischkammer 13 gedrückt wird.

Das System ist so ausgebildet ist, dass eine Kopplung des Druckluftanschlusses 40 des Aufstechmittels 16 mit dem Druckluftauslass 32 der Halterung 24 sofort erfolgt, sobald die Kartuschenaufnahme 10 in die Halterung 24 eingesetzt ist und/oder eine Auslösemechanik für den Befestigungsflansch betätigt wird.

Die Außenwandung des Aufstechmittels 16 ist mit mehreren und insbesondere genau fünf nahezu parallel zueinander verlaufenden Seitenkanälen 17 zum Leiten des Substrats in Richtung der Mischkammer 13 ausgebildet, wenn die Membran 14 durchstochen ist. Durch die seitlich am Aufstechmittel 16 ausgebildeten Seitenkanäle kann das Substrat dann an der Membran 14 vorbei in Richtung Mischkammer 13 fließen. Die Seitenkanäle 17 sind jeweils in Form einer einseitig offenen Nut ausgebildet. Denkbar ist, dass der Querschnitt der Seitenkanäle und/oder die Anzahl der Seitenkanäle an die Viskosität des Substrats angepasst ist, so dass die Seitenkanäle 17 den Fluss des Substrats in Richtung Mischkammer 13 kontrollieren bzw. begrenzen. Der Aufstechdorn 16 ist vorzugsweise als Kunststoffteil und besonders bevorzugt als Kunststoff-Spritzgussteil ausgebildet.

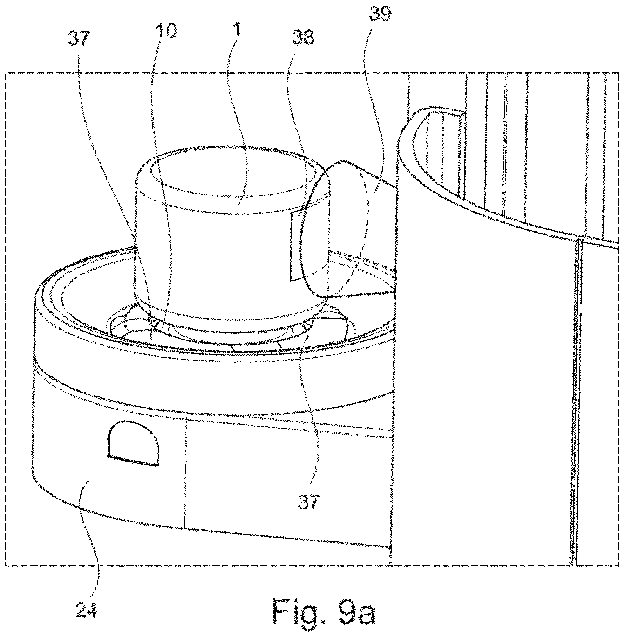

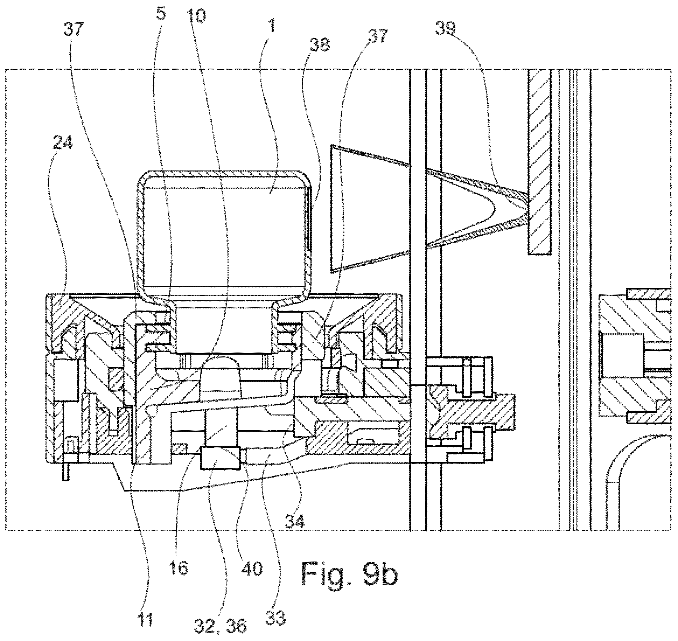

In Figuren 9a und 9b ist nun ein Dispenser und ein System gemäß einer dritten Ausführungsform der vorliegenden Erfindung dargestellt.

Das System umfasst ein Kartuschensystem bestehend aus der anhand von Figuren 6a bis 6c erläuterten Kartusche 1 und der anhand von Figuren 7a bis 8b erläuterten Kartuschenaufnahme 10. Kartusche 1 und Kartuschenaufnahme 10 sind miteinander verbunden, insbesondere verclipst.

Der Dispenser des Systems umfasst eine Halterung 24, in welche das Kartuschensystem durch den Benutzer manuell eingesetzt wird.

Die Halterung 24 umfasst den Druckluftauslass 32, welcher nach dem Einsetzen des Kartuschensystems in die Halterung 24, eine Fluidverbindung mit dem Druckluftanschluss 40 am Aufstechmittel 16 der Kartuschenaufnahme 10 eingeht. Der Druckluftauslass 32 des Dispensers ist über eine flexible Leitung 33 mit einer Druckluftquelle des Dispensers, beispielsweise einem Kompressor im Inneren des Gehäuses des Dispensers verbunden, so dass die Druckluftleitung 31 im Inneren des Aufstechmittels 16 unter Druck gesetzt wird. Denkbar ist auch, dass die Druckluftquelle des Dispensers eine austauschbare Gaskartusche umfasst. Der Druckluftauslass 32 ist als feststehendes Element ausgebildet und umfasst somit gleichzeitig das Auslöseelement, welches das Aufstechmittel 16 von seiner eingefahrenen Ausgangsposition in die ausgefahrene Position, in welcher es die Membran 14 durchsticht und der Druckluftausgang innerhalb der Hohlraums der Kartusche 1 angeordnet ist, überführt.

Die Halterung 24 weist ferner den Flüssigkeitsanschluss 35 (in Figur 2 auch als Leitung 22 bezeichnet) auf, durch welche dem Wasserzulauf 15 der Kartuschenaufnahme 10 Wasser aus einem Wasserreservoir des Dispensers zugeführt wird. Das Wasserreservoir umfasst insbesondere einen herausnehmbaren Wassertank, aus welchem Wasser mittels einer oder mehrerer Pumpen entnommen und dem Wasserzulauf 15 unter Druck zugeführt wird. Vorzugsweise wird die Verbindung zwischen der Fluidzuführung und dem Wasserzulauf 15 direkt hergestellt, sobald das Kartuschensystem in die Halterung 24 eingesetzt wird. Das Wasser aus dem Wassertank wird vor der Zuführung zum Wasserzulauf 15 optional noch innerhalb des Dispensers mittels eines Carbonisierers carbonisiert (also Kohlensäure zugesetzt wird) und/oder mittels einer Kühleinheit gekühlt wird. Die Kühleinheit umfasst insbesondere einen Kühlkreislauf mit Kompressor und ist, wie auch der Carbonisierer, ebenfalls in das Gehäuse des Dispensers integriert.

Die Halterung 24 umfasst ferner einen Befestigungsflansch 34, welcher die Kartuschenaufnahme 10 beim Einsetzen in die Halter formschlüssig und/oder kraftschlüssig umgreift. Der Befestigungsflansch 34 umfasst hierfür wenigstens zwei Klauen 37, welche die Kartuschenaufnahme 10 radial umgreifen. Die Halterung 24 weist zudem eine Auslösemechanik zur Betätigung des Befestigungsflansches 34 auf. Die Auslösemechanik umfasst beispielsweise einen manuell durch den Benutzer zu betätigen Handhebel an der Halterung 24, welcher bei seiner Betätigung um eine zu Längsachse der Kartusche 2 im Wesentlichen parallele Drehachse verschwenkbar ist. Der Handhebel ist über ein Übersetzungsgetriebe mit den Klauen 37 des Befestigungsflansches 34 derart gekoppelt, dass durch die Verschenkung des Handhebels die Klauen 37 aufeinander zu bewegt werden und die Kartuschenaufnahme 10 zwischen sich formschlüssig aufnehmen oder einklemmen.

Gleichzeitig bewirkt das Übersetzungsgetriebe eine Übersetzung der Drehbewegung des Handhebels in eine lineare Translationsbewegung des Befestigungsflansches 34 nach unten, so dass das gesamte Kartuschensystem abgesenkt wird. Die Kartuschenaufnahme 10 wird somit relativ zu dem feststehenden Auslöseelement 36 derart bewegt, dass das Aufstechmittel 16 an dem Auslöseelement 36 anschlägt, wodurch sich das Aufstechmittel 16 von der eingefahrenen Position in die ausgefahrene Position bewegt. Hierdurch wird die Membran 14 perforiert. Denkbar ist auch, dass durch das Absenken der Kartuschenaufnahme 10 relativ zum Auslöseelement 36 erst die Fluidverbindung zwischen dem Druckluftauslass 32 und dem Druckluftanschluss 40 hergestellt wird. Das Übersetzungsgetriebe erzeugt die Übersetzung und Absenkbewegung durch ein Spindelhubgetriebe.

Durch Einleiten der Druckluft in den Hohlraum und des Wassers in die Mischkammer 13 wird nun der Getränkeherstellungsprozess eingeleitet und das in der Mischkammer 14 erzeugte Getränke kann durch den Ablauf 11 in ein unterhalb des Ablaufs 11 auf einer Auflage des Dispensers angeordnetem Trinkgefäß gelangen. Die Auflage ist insbesondere schwenkbar und/oder höhenverstellbar vorgesehen.

Die Kartusche 1 weist in ihrem dem Gehäuse des Dispensers zugewandten abgeflachten Bereich 28 die Produktidentifikationskennung 38 auf. Die Produktidentifikationskennung 38 umfasst dabei einen QR-Code, in welchen Informationen über das in dem Hohlraum vorhandene Substrat eingebettet sind. An der gegenüberliegenden Seite ist am Gehäuse des Dispensers ein Kennungsdetektor 39 in Form einer optischen Kamera, insbesondere CCD-Kamera angeordnet. Der QR-Code wird von der optischen Kamera erfasst und mittels einer Auswerteeinheit des Dlspensers ausgewertet. Auf diese Weise wird seitens des Dispensers erkannt, um welche Art von Kartusche 1 und/oder Substrat es sich bei dem in die Halterung 24 eingesetzten Kartuschensystem handelt. Anhand dieser Informationen können aus einem internen Speicher des Dispensers ggf. Informationen über die Zubereitung des Getränks mit Hilfe des in der Kartusche 1 befindlichen Substrats geladen werden. Insbesondere werden hierdurch Sollwerte für den zeitlichen und absoluten Verlauf des Volumenstroms, der Temperatur, des Drucks und/oder der Carbonisierung des eingespeisten Wassers oder des zeitlichen und absoluten Verlaufs des Volumenstroms und/oder des Drucks der eingespeisten Druckluft vorgegeben. Denkbar ist auch, dass das Verhältnis zwischen dem Volumenstrom des Verdünnungsmittels und dem Volumenstrom der Druckluft in Abhängigkeit der verifizierten Produktidentifikationskennung gesteuert wird, um beim hergestellten Getränk für den jeweiligen Kartuschentyp das optimale Ergebnis hinsichtlich Aussehen und Geschmack zu erzielen.

Nach der Herstellung des Getränks kann der Handhebel von dem Benutzer zurück verschwenkt werden, wodurch sich das Kartuschensystem wieder anhebt. Das somit freigegebene Kartuschensystem kann nun von dem Dispenser entnommen und entsorgt bzw. recycled werden.

### Bezugszeichenliste

- 1: Kartusche
- 2: Bewegungsrichtung
- 3: Hals
- 4: Verbindungsbereich
- 5: Flansch
- 6: Wandbereich
- 7: Bodenbereich
- 8: Positionier- und/oder Abdeckmittel, Ein- und/oder Ausbuchtung,
- 9: Zulauf der Substanz, Aufstechmittel
- 10: Kartuschenaufnahme
- 11: Ablauf Substanz plus Lösungsmittel/Wasser
- 12: Strömungsrichtung Substanz plus Lösungsmittel/Wasser
- 13: Mischkammer
- 14: Verschluss, Membran
- 15: Lösemittel-, Wasserzulauf
- 16: Aufstechmittel, Dorn
- 17: Ablaufkanäle
- 18: Gaseinlass
- 19: Dichtung, Bunddichtung
- 20: Befestigungsmittel, Bund
- 21: Auflage
- 22: Kanal
- 23: Ein- und/oder Ausbuchtung der Kartuschenaufnahme
- 24: Halterung
- 25: Führung für die Kartuschenaufnahme
- 26: Ausnehmung
- 27: Führungskante
- 28: Dornführung
- 29: Abgeflachter Bereich
- 30: Rastleiste
- 31: Druckluftleitung
- 32: Druckluftauslass
- 33: Leitung
- 34: Befestigungsflansch
- 35: Flüssigkeitsanschluss
- 36: Auslöseelement
- 37: Klaue
- 38: Produktidentifikationskennung
- 39: Kennungsdetektor
- 40: Druckluftanschluss

## Patentansprüche

1. System aufweisend einen Dispenser, eine Kartuschenaufnahme (10) und eine Kartusche (1), wobei der Dispenser eine Kartuschenhalterung (24) aufweist, die mindestens eine Führung und/oder Verdrehsicherung (25, 27) für die Kartusche (1) und/oder die Kartuschenaufnahme (10) aufweist, wobei die Kartuschenhalterung (24) eine Ausnehmung (26) aufweist, die die Kartusche (1) und/oder die Kartuschenaufnahme (10) zumindest teilweise aufnimmt, wobei die Kartuschenaufnahme (10) einen Zulauf (15) für ein Verdünnungsmittel, eine Mischkammer (13), in der das Verdünnungsmittel und ein Getränke- und/oder Lebensmittelsubstrat gemischt werden, und einem Ablauf (11) aufweist, wobei die Kartusche (1) mittels einer Membran (14) verschlossen ist und die Kartuschenaufnahme (10) ein Aufstechmittel (16) zum Perforieren der Membran (14) aufweist, wobei das Aufstechmittel (16) in einer Flucht mit dem Zulauf (15) und dem Ablauf (11) vorgesehen ist, **dadurch gekennzeichnet dass** das Aufstechmittel als Dorn (16) ausgestaltet ist, der aus dem Boden der Mischkammer (13) ragt.

2. System nach Anspruch 1, wobei sich bezogen auf die Strömungsrichtung des Verdünnungsmittels der Strömungsquerschnitt der Kartuschenaufnahme (10) zunächst erweitert und dann wieder vermindert.

3. System nach einem der Ansprüche 1 oder 2, **dadurch gekennzeichnet, dass** die Mischkammer (13) eine Ausbuchtung aufweist.

4. System nach Anspruch 3, **dadurch gekennzeichnet, dass** der Ablauf (11) in der Ausbuchtung vorgesehen ist.

5. System nach einem der vorhergehenden Ansprüche, **dadurch gekennzeichnet, dass** die Kartuschenaufnahme (10) eine Dornführung (28) aufweist, in welcher das Aufstechmittel (16) verschiebbar gelagert ist, wobei das Aufstechmittel (16) zwischen einer eingefahrenen Position, in welcher das Aufstechmittel (16) von der Membran (14) beabstandet ist, und einer ausgefahrenen Position, in welcher das Aufstechmittel (16) die Membran (14) der Kartusche (1) durchsticht und bis in die Kartusche (1) ragt, verschiebbar ist.

6. System nach Anspruch 5, **dadurch gekennzeichnet, dass** in die Außenwandung des Aufstechmittels (16) wenigstens ein Seitenkanal (71) zum Leiten des Getränke- und/oder Lebensmittelsubstrats in Richtung der Mischkammer (13), wenn die Membran (14) von dem Aufstechmittel (16) durchstochen ist, eingebracht ist.

7. System nach einem der vorhergehenden Ansprüche, **dadurch gekennzeichnet, dass** in das Aufstechmittel (16) eine Druckluftleitung (31) integriert ist und wobei an einer der Kartusche (1) abgewandten Seite des Aufstechmittels (16) ein, insbesondere von außerhalb der Kartuschenaufnahme (10) zugänglicher Druckluftanschluss (40) der Druckluftleitung (31) zur Verbindung mit einer Druckluftquelle ausgebildet ist und wobei an einer der Kartusche (1) zugewandten Seite des Aufstechmittels (16) ein Druckluftausgang der Druckluftleitung (34) zum Einblasen der Druckluft in die Kartusche (1) ausgebildet ist.

8. System nach Anspruch 7, **dadurch gekennzeichnet, dass** das System derart ausgebildet ist, dass eine Kopplung des Druckluftanschlusses (40) mit dem Druckluftauslass der Halterung erfolgt, wenn die Kartuschenaufnahme (10) in die Halterung eingesetzt wird.

9. System nach einem der vorhergehenden Ansprüche, **dadurch gekennzeichnet, dass** der Zulauf (15) und der Ablauf (11) an gegenüberliegenden Enden der Kartuschenaufnahme (10) vorgesehen sind.

10. System nach einem der vorhergehenden Ansprüche, **dadurch gekennzeichnet, dass** an oder in der Kartuschenaufnahme (10) eine Kartusche (1) vorgesehen ist, die einen Wandbereich (6) aufweist, an dessen einem Ende sich ein Verbindungsbereich (4) anschließt, der, insbesondere mit der Membran (14), verschlossen ist und an dessen gegenüberliegendem Ende ein Bodenbereich (7) vorgesehen ist, wobei der Wandbereich und der Bodenbereich einen Hohlraum aufspannen, der ein Getränke- und/oder Lebensmittelsubstrat aufnimmt.

11. System nach Anspruch 10, **dadurch gekennzeichnet, dass** der Verbindungsbereich (4) wenigstens einen Flansch (5) aufweist, der mit einem Positioniermittel und/oder Abdeckmittel (8) versehen ist.

12. System nach Anspruch 11, **dadurch gekennzeichnet, dass** das Positioniermittel und/oder Abdeckmittel (8) eine Ein- und/oder Ausbuchtung ist, die aus dem Flansch, insbesondere dessen Umfang, hervorsteht.

13. System nach einem der Ansprüche 10 bis 12, **dadurch gekennzeichnet, dass** zwischen dem Wandbereich (6) und dem Verbindungsbereich (4) ein Hals (3) vorgesehen ist.

14. System nach einem der vorhergehenden Ansprüche, **dadurch gekennzeichnet, dass** die Membran (14) an dem Flansch befestigt, insbesondere angesiegelt ist.

15. System nach einem der Ansprüche 10 bis 13, **dadurch gekennzeichnet, dass** die Kartuschenaufnahme (10) an dem Verbindungsbereich (4) der Kartusche (1) insbesondere lösbar befestigt ist.

## Claims

1. System having a dispenser, a cartridge receptacle (10) and a cartridge (1), wherein the dispenser has a cartridge holder (24) which has at least one guide and/or anti-rotation lock (25, 27) for the cartridge (1) and/or for the cartridge receptacle (10), wherein the cartridge holder (24) has a recess (26) which receives at least part of the cartridge (1) and/or the cartridge receptacle (10), wherein the cartridge receptacle (10) has an inflow (15) for a diluting medium, a mixing chamber (13) in which the diluting medium and a drink and/or food substrate are mixed, and an outflow (11), wherein the cartridge (1) is sealed by means of a membrane (14) and the cartridge receptacle (10) has a piercing means (16) for perforating the membrane (14), wherein the piercing means (16) is provided in alignment with the inflow (15) and with the outflow (11), **characterized in that** the piercing means is configured as a spike (16) which projects from the base of the mixing chamber (13).

2. System according to Claim 1, wherein the flow cross-section of the cartridge receptacle (10) is initially widened and then reduced again with respect to the direction of flow of the diluting medium.

3. System according to one of Claims 1 or 2, **characterized in that** the mixing chamber (13) has a bulge.

4. System according to Claim 3, **characterized in that** the outflow (11) is provided in the bulge.

5. System according to one of the preceding claims, **characterized in that** the cartridge receptacle (10) has a spike guide (28) in which the piercing means (16) is mounted displaceably, wherein the piercing means (16) can be displaced between a retracted position in which the piercing means (16) is spaced apart from the membrane (14) and an extended position in which the piercing means (16) punctures the membrane (14) of the cartridge (1) and projects into the cartridge (1).

6. System according to Claim 5, **characterized in that** at least one side channel (71) for conveying the drink and/or food substrate in the direction of the mixing chamber (13) when the membrane (14) is punctured by the piercing means (16) is introduced into the outer wall of the piercing means (16).

7. System according to one of the preceding claims, **characterized in that** a compressed-air line (31) is integrated into the piercing means (16) and wherein, at a side of the piercing means (16) which faces away from the cartridge (1), a compressed-air connector (40), which in particular can be accessed from outside the cartridge receptacle (10), of the compressed-air line (31) is designed for connection to a compressed-air source, and wherein, at a side of the piercing means (16) which faces the cartridge (1), a compressed-air output of the compressed-air line (34) is designed to blow the compressed air into the cartridge (1).

8. System according to Claim 7, **characterized in that** the system is designed in such a way that coupling of the compressed-air connector (40) to the compressed-air outlet of the holder takes place when the cartridge receptacle (10) is inserted into the holder.

9. System according to one of the preceding claims, **characterized in that** the inflow (15) and the outflow (11) are provided at opposite ends of the cartridge receptacle (10).

10. System according to one of the preceding claims, **characterized in that** provided at or in the cartridge receptacle (10) is a cartridge (1) which has a wall region (6), one end of which adjoins a connecting region (4) which is sealed in particular with the membrane (14) and the opposite end of which is provided with a base region (7), wherein the wall region and the base region span a hollow space which contains a drink and/or food substrate.

11. System according to Claim 10, **characterized in that** the connecting region (4) has at least one flange (5) which is provided with a positioning means and/or covering means (8).

12. System according to Claim 11, **characterized in that** the positioning means and/or covering means (8) is an indentation and/or a bulge which protrudes from the flange, in particular the periphery thereof.

13. System according to one of Claims 10 to 12, **characterized in that** a neck (3) is provided between the wall region (6) and the connecting region (4).

14. System according to one of the preceding claims, **characterized in that** the membrane (14) is fastened, in particular sealed, on the flange.

15. System according to one of Claims 10 to 13, **characterized in that** the cartridge receptacle (10) is fastened, in particular detachably, on the connecting region (4) of the cartridge (1).

## Revendications

1. Système comportant un distributeur, un logement de cartouche (10) et une cartouche (1), le distributeur comportant un support de cartouche (24) qui comporte au moins un guide et/ou un moyen anti-rotation (25, 27) destiné à la cartouche (1) et/ou au logement de cartouche (10), le support de cartouche (24) comportant un évidement (26) qui reçoit au moins partiellement la cartouche (1) et/ou le logement de cartouche (10), le logement de cartouche (10) comportant une entrée (15) destinée à un diluant, une chambre de mélange (13) dans laquelle le diluant et un substrat de boisson et/ou un substrat alimentaire sont mélangés, et une sortie (11), la cartouche (1) étant fermée au moyen d'une membrane (14) et le logement de cartouche (10) comportant un moyen de perçage (16) destiné à perforer la membrane (14), le moyen de perçage (16) étant disposé en alignement avec l'entrée (15) et la sortie (11), **caractérisé en ce que** le moyen de perçage est conçu sous la forme d'un ardillon (16) qui fait saillie du fond de la chambre de mélange (13).

2. Système selon la revendication 1, la section transversale d'écoulement du logement de cartouche (10) s'élargissant d'abord puis se réduisant à nouveau en fonction de la direction d'écoulement du diluant.

3. Système selon l'une des revendications 1 ou 2, **caractérisé en ce que** la chambre de mélange (13) comporte un renflement.

4. Système selon la revendication 3, **caractérisé en ce que** la sortie (11) est prévu dans le renflement.

5. Système selon l'une des revendications précédentes, **caractérisé en ce que** le logement cartouche (10) comporte un guide d'ardillon (28) dans lequel le moyen de perçage (16) est monté de manière coulissante, le moyen de perçage (16) pouvant coulisser entre une position rétractée, dans laquelle le moyen de perçage (16) est espacé de la membrane (14), et une position déployée, dans laquelle le moyen de perçage (16) perce la membrane (14) de la cartouche (1) et fait saillie dans la cartouche (1).

6. Système selon la revendication 5, **caractérisé en ce qu'**au moins un conduit latéral (71) est introduit dans la paroi extérieure du moyen de perçage (16) afin de guider le substrat de boisson et/ou le substrat alimentaire en direction de la chambre de mélange (13) lorsque la membrane (14) est percée par le moyen de perçage (16).

7. Système selon l'une des revendications précédentes, **caractérisé en ce qu'**une conduite d'air comprimé (31) est intégrée dans le moyen de perçage (16) et un raccord d'air comprimé (40) de la conduite d'air comprimé (31), qui est accessible notamment depuis l'extérieur du logement de cartouche (10), étant formé sur un côté du moyen de perçage (16) qui est à l'opposé de la cartouche (1) afin d'être relié à une source d'air comprimé et une sortie d'air comprimé de la conduite d'air comprimé (34) étant formée sur un côté du moyen de perçage (16) qui est dirigé vers la cartouche (1) afin de souffler l'air comprimé dans la cartouche (1).

8. Système selon la revendication 7, **caractérisé en ce que** le système est conçu de telle sorte que le raccord d'air comprimé (40) soit accouplé à la sortie d'air comprimé du support lorsque le logement de cartouche (10) est inséré dans le support.

9. Système selon l'une des revendications précédentes, **caractérisé en ce que** l'entrée (15) et la sortie (11) sont prévues à des extrémités opposées du logement de cartouche (10).

10. Système selon l'une des revendications précédentes, **caractérisé en ce qu'**une cartouche (1) est prévue sur ou dans le logement de cartouche (10), laquelle cartouche comporte une zone de paroi (6), dont une extrémité est raccordée à une zone de liaison (4) qui est fermée en particulier avec la membrane (14), et dont l'extrémité opposée est pourvue d'une zone de fond (7), la zone de paroi et la zone de fond formant une cavité qui reçoit un substrat de boisson et/ou un substrat alimentaire.

11. Système selon la revendication 10, **caractérisé en ce que** la zone de liaison (4) comporte au moins une bride (5) qui est munie d'un moyen de positionnement et/ou d'un moyen de recouvrement (8).

12. Système selon la revendication 11, **caractérisé en ce que** le moyen de positionnement et/ou moyen de recouvrement (8) sont un creux et/ou un renflement qui fait saillie de la bride, notamment de sa circonférence.

13. Système selon l'une des revendications 10 à 12, **caractérisé en ce qu'**un col (3) est prévu entre la zone de paroi (6) et la zone de liaison (4).

14. Système selon l'une des revendications précédentes, **caractérisé en ce que** la membrane (14) est fixée, notamment scellée, à la bride.

15. Système selon l'une des revendications 10 à 13, **caractérisé en ce que** le logement de cartouche (10) est fixé, notamment de manière amovible, à la zone de liaison (4) de la cartouche (1).
